# EUROPÄISCHE PATENTSCHRIFT

(11) **EP 3 392 017 B1**
(45) Veröffentlichungstag und Bekanntmachung des Hinweises auf die Patenterteilung: **30.03.2022**
(21) Anmeldenummer: 18177407.6
(22) Anmeldetag: 20.08.2014
(51) Int. Cl.: B29C 49/48, B29C 49/04

(54) **VORRICHTUNG UND VERFAHREN ZUM BLASFORMEN EINES BLASSCHLAUCHS**
DEVICE AND METHOD FOR BLOW MOULDING A BLOW HOSE
DISPOSITIF ET PROCÉDÉ DE SOUFFLAGE D'UNE GAINE SOUFFLÉE

(43) Veröffentlichungstag der Anmeldung: 24.10.2018
(62) Teilanmeldung aus: 14181503.5
(73) Patentinhaber: Etimex Technical Components GmbH, 89616 Rottenacker (DE)
(72) Erfinder: Werner, Herbert, 89610 Oberdischingen (DE); Vogt, Marc, 89614 Öpfingen (DE)
(74) Vertreter: Rothkopf, Ferdinand

(56) Entgegenhaltungen:
- EP-A1- 0 796 715
- EP-A1- 1 097 793
- EP-A2- 1 129 839
- DE-A1-102006 037 556
- JP-A- S 644 318

## Beschreibung

### Hintergrund der Erfindung

Die Erfindung betrifft eine Vorrichtung zum Blasformen eines Blasschlauchs bzw. eines Blasformteils, mit einer Blasform, in deren Formhohlraum der Blasschlauch zumindest teilweise aufzunehmen ist, und mit einem in den Formhohlraum einfahrbaren Formschieber. Ferner betrifft die Erfindung ein Verfahren zum Blasformen eines Blasschlauchs mit den Schritten: Einführen bzw. Einbringen eines Blasschlauchs in einen Formhohlraum einer Blasform und Einfahren mindestens eines Formschiebers in den Formhohlraum.

Beim Blasformen, das auch als Extrusionsblasformverfahren bezeichnet wird, wird ein Vorformling in Gestalt eines erwärmten, flexiblen Blasschlauchs aus thermoplastischem Kunststoff mittels einer Extrusionseinrichtung in einen Formhohlraum einer Blasform eingeführt. Dabei kann der Blasschlauch vollständig in den Formhohlraum eingelegt sein oder der Blasschlauch ist größer als der Formhohlraum, wodurch der Blasschlauch über den Formhohlraum hinausgeht. In der Blasform wird der Vorformling dann durch Schließelemente vorne und hinten bzw. oben und unten abgequetscht. Dann schließt sich ein Aufblasen des Vorformlings zu einem Fertigformling und nachfolgend ein Kühlen des Fertigformlings an. Der Blasschlauch wird also mittels einer Blaseinrichtung aufgeblasen, wodurch sich der Blasschlauch mit seinen Wandbereichen an die Innenseiten der Blasform anlegt, das Kunststoffmaterial des Blasschlauchs abkühlt und auf diese Weise ein Kunststoffhohlkörper mit einer hohlförmigen Endgestalt entsteht. Als Blasformverfahren ist ferner ein Saugblasen bekannt, bei dem ein Blasschlauch als Vorformling aus einer Düse einer Extrusionseinrichtung in eine geschlossene Werkzeugform bzw. Blasform befördert und über einen Luftstrom durch die Blasform hindurch "gesaugt" wird. Der Luftstrom transportiert also den Vorformling und verhindert dabei einen vorzeitigen Kontakt des Vorformlings mit der Werkzeugform.

Derartige Blasverfahren erlauben relativ einfache und preiswerte Blasformwerkzeuge. Mit Blasverfahren können also insbesondere Hohlkörper in Großserienfertigung preiswert hergestellt werden.

Ferner werden solche Blasverfahren auch verwendet, um innere Stützstrukturen für faserverstärkte Formteile, auszubilden. Diese Stützstrukturen werden während der Herstellung und Aushärtung der faserverstärkten -Formteile als nicht wiederverwendbare Einmalform benötigt. Die Stützstrukturen werden mit Fasern umwickelt und mit Harz unter Druck imprägniert. Hierzu müssen die Blasformteile eine hohe Steifigkeit aufweisen und dennoch möglichst preiswert sein. Ferner sollten sie eine geschlossene Oberfläche aufweisen und stofflich wieder verwertbar sein.

Aus EP 1 129 839 A2 sind eine Vorrichtung und ein Verfahren zum Blasformen eines Blasschlauchs bekannt, mit denen eine aufprallabsorbierende Rippe im Inneren des geformten Blasschlauchs zu schaffen ist beziehungsweise geschaffen wird. Dabei wird ein Vorformling in geöffnete Teilformen gegeben, die dann zu einem Formhohlraum geschlossen werden. Als nächstes wird eine rippenformende Platte gegen eine Teilform gedrängt. Dabei drückt eine Teilwand des Vorformlings gegen dessen gegenüberliegende Teilwand, wobei die beiden Teilwände miteinander verschmelzen.

Aus JP S64 4318 A sind eine Vorrichtung und ein Verfahren zum Blasformen eines Schalldämpfers bekannt, bei denen simultan mit dem Schließen des Formhohlraums um einen Blasschlauch ein Formschieber in den Formhohlraum hineinzufahren ist beziehungsweise hineingefahren wird. Dabei bewegt der Formschieber einen Wandbereich des Blasschlauchs bis zu einem gegenüberliegenden Wandbereich des Blasschlauchs.

Aus EP 1 097 793 A1 sind eine Vorrichtung und ein Verfahren für hohle, blasgeformte Erzeugnisse mit Innenwänden bekannt. Dabei wird ein Vorformling zwischen zwei voneinander getrennten Formteilen positioniert und voll aufgeblasen. Danach werden die Formteile geschlossen. Während des Schließens werden zwei zwischen den Formteilen vorab teilweise eingefahrene Formkerne vollständig eingefahren. Sie bewegen dabei eine Teilwand des Vorformlings an seine gegenüberliegende Teilwand. Die Teilwände verkleben miteinander.

Aus DE 10 2006 037556 A1 und EP 0 796 715 A1 sind Vorrichtungen und Verfahren zum Herstellen von miteinander verbundenen Kunststoffrohren bekannt, mit denen jeweils ein Steg zwischen zwei Rohren zu bilden ist.

### Zugrundeliegende Aufgabe

Der Erfindung liegt die Aufgabe zugrunde, eine Vorrichtung und ein Verfahren zum Blasformen zu schaffen, mittels denen auf kostengünstige Weise steife Hohlkörperstrukturen geschaffen werden können.

### Erfindungsgemäße Lösung

Diese Aufgabe ist erfindungsgemäß mit einer Vorrichtung zum Blasformen eines Blasschlauchs nach Anspruch 4 gelöst, insbesondere mit einer Blasform, in deren Formhohlraum der Blasschlauch zumindest teilweise aufzunehmen ist, und mit einem in den Formhohlraum einfahrbaren ersten Formschieber, bei der mit dem ersten Formschieber ein Wandbereich des Blasschlauchs derart in den Formhohlraum hinein bis zu einem gegenüberliegenden Wandbereich des Blasschlauchs bewegbar ist, dass es zu einer Verklebung der beiden Wandbereiche kommt. Das Verkleben kann auch als Verschweißen bezeichnet werden.

Mit der erfindungsgemäßen Vorrichtung und insbesondere mittels deren speziell einfahrbaren Schiebers ist es möglich einen Wandbereich in den Formhohlraum hineinzubewegen und diesen Wandbereich darüber hinaus mit einem gegenüberliegenden Wandbereich zu verkleben. Mit der Verklebung der beiden Wandbereiche werden diese stofflich bzw. stoffschlüssig miteinander verbunden, so dass ein, auch Kräfte übertragender, Kontaktbereich entsteht. Es ergibt sich auf kostengünstige Weise eine Versteifung innerhalb des damit ausgebildeten Hohlkörpers, der insbesondere für die Funktion als Einmalform bei der Herstellung von faserverstärkten Formteilen von Vorteil ist.

Bisher waren bei größeren faserverstärkten Formteilen dünne, blasgeformte bzw. blastechnisch hergestellte Stützstrukturen zu labil. Durch die erfindungsgemäß herstellbaren Verrippungen kann die Steifigkeit des Fertigformlings hingegen derart erhöht werden, dass sich neue Anwendungsbereiche ergeben. Trotz niedriger Wanddicken, besteht eine hohe Formstabilität, und dies bei zumindest einseitig geschlossener Oberfläche am gegenüberliegenden Wandbereich.

Ferner kann mit der erfindungsgemäßen Vorgehensweise auf herkömmliche Verrippungen, die in Gestalt von Oberflächenwellen ausgebildet waren, verzichtet werden. Auch kann auf ansonsten notwendige Einlegeteile in die Hohlform verzichtet werden, die als separates Bauteil herzustellen wären. Mit der erfindungsgemäßen Lösung treten auch weniger geometrische Begrenzungen auf und die gesamte Stützstruktur kann für das zugehörige faserverstärkte Formteil in nur einem Arbeitsgang gefertigt werden.

Der erste Formschieber ist erfindungsgemäß nach der Verklebung der beiden Wandbereiche wieder aus dem Formhohlraum vollständig heraus bewegbar. Mit dem Herausfahren wird dererfindungsgemäße Formschieber aus dem Formhohlraum wieder entfernt und es entsteht so an der Wand des Formhohlraums wieder eine geschlossene Oberfläche. Zugleich verbleibt aufgrund der erfindungsgemäß hergestellten Verklebung der mit dem Formschieber in den Formhohlraum eingefahrene Wandbereich als Rippe bzw. Quersteg im Inneren des Formhohlraums. Es ergibt sich mit dieser Vorgehensweise also ein Hohlbauteil mit außenseitig geschlossener Oberfläche und innenseitiger Rippe. Erfindungsgemäß werden also der oder die Formschieber wieder aus dem Formhohlraum bzw. dem Bauteilbereich der Form herausgefahren, wodurch die nach innen bewegten Wandbereiche des Blasformteils aufgrund des innen wirkenden Überdrucks gegeneinander gepresst werden und dabei verkleben. Dadurch wird der, durch die Formschieber gebildete Spalt verschlossen und außen eine glatte, geschlossene Oberfläche für das Blasformteil gebildet.

Bei der erfindungsgemäßen Vorrichtung ist ferner vorteilhaft ein zweiter Formschieber vorgesehen, mit dem der gegenüberliegende Wandbereich des Blasschlauchs in den Formhohlraum hinein zu bewegen ist. Mit dem zweiten Formschieber wird also eine zweite Rippe ausgebildet, die vorteilhaft der ersten gegenüberliegend angeordnet ist. Aufgrund der zweiten Rippe muss sowohl der Formschieber der ersten Rippe als auch der zweiten Rippe vergleichsweise wenig weit bzw. tief in den Formhohlraum hineinbewegt werden. Damit ergeben sich gleichmäßigere und dickere Wandstärken an den hergestellten Rippen.

Ferner ist bei der Vorrichtung gemäß der Erfindung eine Blaseinrichtung vorgesehen, mittels der der Blasschlauch vor der Verklebung der beiden Wandbereiche teilweise aufblasbar ist. Das teilweise Aufblasen geschieht also vorteilhaft vor oder während dem Einfahren des ersten bzw. zweiten Formschiebers. Mit dem teilweisen Aufblasen kann der Vorformling in der Blasform vorausgerichtet und vorpositioniert werden.

Alternativ oder zusätzlich ist vorteilhaft eine Blaseinrichtung vorgesehen, mittels der der Blasschlauch nach der Verklebung der beiden Wandbereiche vollständig aufblasbar ist. Das vollständige Aufblasen geschieht also während oder nach dem Ausfahren des ersten bzw. zweiten Formschiebers. Besonders bevorzugt erfolgt das vollständige Aufblasen erst, wenn sowohl der erste als auch der zweite Formschieber vollständig aus dem Formhohlraum wieder herausgefahren sind. Die Erfindung sieht entsprechend auch ein Verfahren zum Blasformen eines

Blasschlauchs nach Anspruch 1 vor. Diese umfasst insbesondere die Schritte : Einführen eines Blasschlauchs in den Bereich des Formhohlraums einer Blasform sowie Einfahren eines ersten Formschiebers in den Formhohlraum und damit Hineinbewegen eines Wandbereichs des Blasschlauchs in den Formhohlraum bis zu einer Verklebung des Wandbereichs mit einem gegenüberliegenden Wandbereich des Blasschlauchs.

Der erste Formschieber wird erfindungsgemäß nach der Verklebung der beiden Wandbereiche wieder aus dem Formhohlraum vollständig herausgefahren, derart dass der Formschieber aus dem Formhohlraum wieder entfernt wird und an der Wand des Formhohlraums wieder eine geschlossene Oberfläche entsteht, derart dass bei einem Gegeneinanderpressen und Verkleben der nach innen bewegten Wandbereiche des Blasschlauchs aufgrund eines innen wirkenden Überdrucks ein durch den Formschieber gebildeter Spalt verschlossen und außen eine glatte, geschlossene Oberfläche für das Blasformteil gebildet wird.

Vorteilhaft wird ferner ein zweiter Formschieber in den Formhohlraum eingefahren und damit der gegenüberliegende Wandbereich des Blasschlauchs in den Formhohlraum bis zu der Verklebung der beiden Wandbereiche hineinbewegt. Vor der Verklebung der beiden Wandbereiche wird erfindungsgemäß der Blasschlauch teilweise aufgeblasen. Das Vorblasen geschieht wie oben erläutert bevorzugt vor oder während dem Einfahren des ersten bzw. zweiten Formschiebers. Alternativ oder zusätzlich wird nach der Verklebung der beiden Wandbereiche der Blasschlauch vollständig aufgeblasen. Das vollständige Aufblasen erfolgt also vorteilhaft während oder nach dem Ausfahren des ersten bzw. zweiten Formschiebers.

Mit dem erfindungsgemäßen Verfahren und dessen vorteilhaften Weiterbildungen wird beim Einformen des Vorformlings in die Blasform eine Verschweißung von Wandbereichen des Blasschlauches im Inneren des zugehörigen Formhohlraums und damit im Inneren bzw. Zwischenbereich des hergestellten Hohlkörpers hergestellt. Die erfindungsgemäßen Formschieber können sowohl von einer als auch von zwei Seiten der zugehörigen Blasform bzw. des zugehörigen Blasschlauchs eingebaut sein. Es lassen sich erfindungsgemäß innen liegende Rippen bzw. Versteifungen bei zugleich geschlossener, äußerer Oberfläche herstellen. Es ist dazu keine besondere maßliche Abstimmung des hergestellten Bauteils erforderlich. Ferner ist die Versteifung mit dem gleichen Material hergestellt, wie die Oberfläche des Bauteils, so dass eine stoffliche Wiederverwertung besonders einfach möglich ist.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:
- Fig. 1: einen Schnitt einer erfindungsgemäßen Vorrichtung bei einem ersten Schritt eines erfindungsgemäßen Verfahrens,
- Fig. 2: den Schnitt gemäß Fig. 1 bei einem zweiten Schritt des erfindungsgemäßen Verfahrens,
- Fig. 3: den Schnitt gemäß Fig. 1 bei einem dritten Schritt des erfindungsgemäßen Verfahrens und
- Fig. 4: den Schnitt gemäß Fig. 1 bei einem vierten Schritt des erfindungsgemäßen Verfahrens.

### Detaillierte Beschreibung des Ausführungsbeispiels

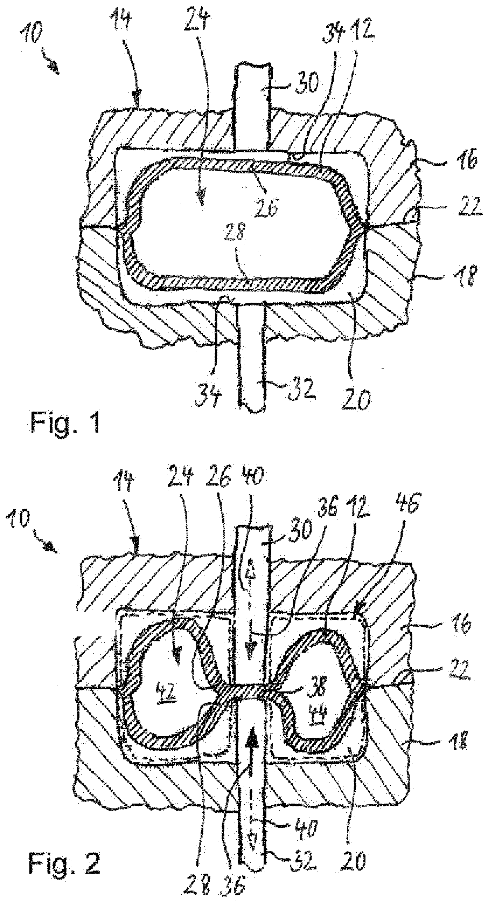

In den Fig. 1 bis 4 ist eine Vorrichtung 10 zum Blasformen eines Blasschlauchs 12 aus thermoplastischem Kunststoff dargestellt. Die Vorrichtung 10 umfasst eine Blasform 14, die aus einer ersten Blasformhälfte 16 und einer zweiten Blasformhälfte 18 gebildet ist. Die beiden Blasformhälften 16 und 18 umschließen zwischen sich einen Formhohlraum 20, wobei sie am Rand des Formhohlraums 20 an einer Formtrennfläche 22 aneinander anliegen.

In dem Formhohlraum 20 ist gemäß Fig. 1 in einem ersten Verfahrensschritt der Blasschlauch 12 als heißer und damit flexibler Vorformling eingebracht. Der Vorformling ist mit dem Schließen der beiden Blasformhälften 16 und 18 zu einer geschlossenen Blasform 12 an der Formtrennfläche 22 gegebenenfalls gequetscht und damit positioniert worden.

Der Blasschlauch 12 weist innerhalb der Blasform 14 einen ersten Wandbereich 26 und einen zweiten Wandbereich 28 auf, die einander an den beiden Blasformhälften 16 und 18 gegenüberliegen. Hinter diesen beiden Wandbereichen 26 bzw. 28 befindet sich außenseitig vom Formhohlraum 20 in der Blasform 14 jeweils ein erster Formschieber 30 bzw. ein zweiter Formschieber 32. Die Formschieber 30 bzw. 32 können in den Formhohlraum 20 hineinbewegt und herausbewegt werden.

Die Formschieber 30 und 32 befinden sich während des Einsetzens des Blasschlauchs 12 in den Formhohlraum 20, wie in Fig. 1 dargestellt, in der Blasform 14 und bilden dabei mit dieser Blasform 14 an der Grenze des Formhohlraums 20 jeweils eine glatte Oberfläche 34. Die Innengestalt des Formhohlraumes 20 entspricht mit ihren glatten Oberflächen 34 also bei diesem Verfahrensschritt der Innengestalt eines herkömmlichen bzw. gewöhnlichen Formhohlraums für das Einsetzen eines Blasschlauchs.

Erst nach einem Voraufblasen des Blasschlauchs 12 werden, wie in Fig. 2 dargestellt, die beiden Formschieber 30 und 32 gemäß einem Pfeil 36 einander gegenüberliegend in den Formhohlraum 20 hineinbewegt. Mit dem Hineinbewegen bzw. Hineinfahren der beiden Formschieber 30 und 32 werden die sich vor diesen Formschiebern 30 und 32 befindenden Wandbereiche 26 und 28 in den Formhohlraum 20 hinein verformt.

Der Verfahrweg der beiden Formschieber 30 und 32 ist derart weit bzw. lang gewählt, dass die beiden Wandbereiche 26 und 28 im Inneren des Formhohlraums in Kontakt miteinander gebracht werden und in diesem Kontaktbereich zu einer Verklebung 38 verkleben. Die Verklebung 38 der beiden Wandbereiche 26 und 28 ergibt sich insbesondere, weil in diesem Verfahrensstadium das Material des Blasschlauchs 12 noch heiß und damit thermoplastisch verformbar und verklebbar ist.

Nachdem die Verklebung 38 ausgebildet ist, werden nachfolgend die beiden Formschieber 30 und 32 wieder vollständig aus dem Formhohlraum 20 herausbewegt. Der Schlauchinnenraum 24 wird auf diese Weise in einen ersten 42 und einen zweiten Teil 44 unterteilt, wobei zugleich an der Grenze des Formhohlraums 20 sich wieder eine glatte Oberfläche 34 ergibt.

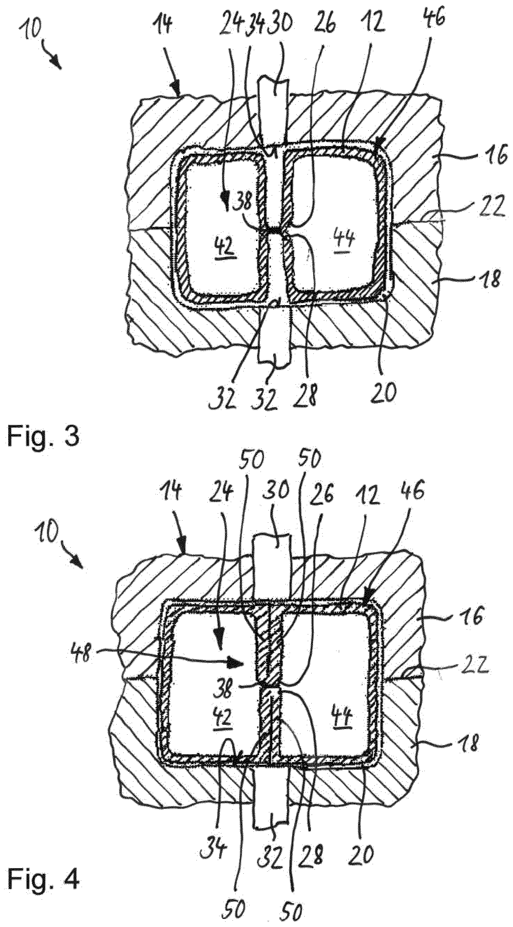

Nachfolgend werden, wie noch in Fig. 2 und dann in Fig. 3 dargestellt ist, diese beiden Teile 42 und 44 des Schlauchinnenraums 24 mittels einer nicht eigens dargestellten Blaseinrichtung zu einer Endform 46 des Blasschlauchs 12 aufgeblasen. Dabei wird das Material des Blasschlauchs 12 von innen nach außen gegen die Innenseite der beiden Blasformhälften 16 und 18 gedrängt. Bei dieser Endform 46 liegt also, wie dann in Fig. 4 dargestellt ist, das Material des Blasschlauchs 12 vollständig innenseitig an der glatten Oberfläche 34 auch vor den beiden zurückgefahrenen Formschiebern 30 und 32 an.

Zugleich bildet sich mit der Endform 46 im Inneren des Blasschlauchs 12 eine Verrippung 48 aus, deren Zentrum von der Verklebung 38 gebildet ist. Von der Verklebung 38 stehen dann nach außen hin insgesamt vier Rippenseitenwände 50 ab, von denen aufgrund des hohen Drucks beim vollständigen Aufblasen des Blasschlauchs 12 mittels der Blaseinrichtung jeweils zwei Rippenseitenwände 50 direkt aneinander gepresst werden. Diese beiden Rippenseitenwände 50 bilden als selbst eine Rippe, deren Material ebenfalls miteinander verklebt ist. Mit dem vollständigen Aufblasen und Anlegen des Materials des Blasschlauchs 12 gegen die Innenseite der Blasform 14 wird das Material abgekühlt. Das Material erhärtet damit und es bildet sich ein Fertigformling, der die innere Verrippung 48 aufweist, zugleich aber auch außenseitig, wie bei einer herkömmlichen Blasform vollständig glatt ist.

### Bezugszeichenliste

- 10: Vorrichtung zum Blasformen
- 12: Blasschlauch
- 14: Blasform
- 16: erste Blasformhälfte
- 18: zweite Blasformhälfte
- 20: Formhohlraum
- 22: Formtrennfläche
- 24: Schlauchinnenraum
- 26: erster Wandbereich
- 28: zweiter Wandbereich
- 30: erster Formschieber
- 32: zweiter Formschieber
- 34: glatte Oberfläche
- 36: Pfeil Hineinbewegen eines Formschiebers
- 38: Verklebung
- 40: Pfeil Herausbewegen eines Formschiebers
- 42: erster Teil des Schlauchinnenraums
- 44: zweiter Teil des Schlauchinnenraums
- 46: Endform des Blasschlauchs
- 48: Verrippung
- 50: Rippenseitenwand

## Patentansprüche

1. Verfahren zum Blasformen eines Blasschlauchs (12) mit den Schritten:
- Einführen eines Blasschlauchs (12) in einen Formhohlraum (20) einer Blasform (14),
- Einfahren eines ersten Formschiebers (30, 32) in den Formhohlraum (20) und damit Hineinbewegen eines Wandbereichs (26, 28) des Blasschlauchs (12) in den Formhohlraum (20) bis es zu einer Verklebung (38) des Wandbereichs (26) mit einem gegenüberliegenden Wandbereich (28) des Blasschlauchs (12) kommt, wobei nach dem Einführen des Blasschlauchs (12) in den Formhohlraum (20) und vor der Verklebung (38) der beiden Wandbereiche (26, 28) der Blasschlauch (12) teilweise aufgeblasen wird und der erste Formschieber (30, 32) nach der Verklebung (38) der beiden Wandbereiche (26, 28) wieder aus dem Formhohlraum (20) vollständig herausgefahren wird, derart dass der Formschieber aus dem Formhohlraum wieder entfernt wird und an der Wand des Formhohlraums (20) wieder eine geschlossene Oberfläche (34) entsteht, derart dass bei einem Gegeneinanderpressen und Verkleben der nach innen bewegten Wandbereiche des Blasschlauchs (12) aufgrund eines innen wirkenden Überdrucks ein durch den Formschieber (30, 32) gebildeter Spalt verschlossen und außen eine glatte, geschlossene Oberfläche für das Blasformteil gebildet wird.

2. Verfahren nach Anspruch 1,
bei dem ein zweiter Formschieber (32) in den Formhohlraum (20) eingefahren und damit der gegenüberliegende Wandbereich (28) des Blasschlauchs (12) in den Formhohlraum (20) bis zu der Verklebung (38) der beiden Wandbereiche (26, 28) hineinbewegt wird.

3. Verfahren nach einem der Ansprüche 1 bis 2,
bei dem nach der Verklebung (38) der beiden Wandbereiche (26, 28) der Blasschlauch (12) vollständig aufgeblasen wird.

4. Vorrichtung (10) zum Blasformen eines Blasschlauchs (12), angepasst zum Durchführen eines Verfahrens gemäß einem der Ansprüche 1 bis 3, mit einer Blasform (14), in deren Formhohlraum (20) der Blasschlauch (12) zumindest teilweise aufzunehmen ist, und mit einem in den Formhohlraum (20) einfahrbaren ersten Formschieber (30, 32),
bei der mit dem ersten Formschieber (30, 32) ein Wandbereich (26) des Blasschlauchs (12) derart in den Formhohlraum (20) hinein bis zu einem gegenüberliegenden Wandbereich (28) des Blasschlauchs (12) bewegbar ist, dass es zu einer Verklebung (38) der beiden Wandbereiche (26, 28) kommt, wobei eine Blaseinrichtung vorgesehen ist, mittels der der Blasschlauch (12) nach dem Einführen des Blasschlauchs (12) in den Formhohlraum (20) und vor der Verklebung (38) der beiden Wandbereiche (26, 28) teilweise aufblasbar ist und wobei der erste Formschieber (30, 32) nach der Verklebung (38) der beiden Wandbereiche (26, 28) wieder aus dem Formhohlraum (20) vollständig heraus bewegbar ist, derart dass der Formschieber aus dem Formhohlraum wieder entfernbar ist und an der Wand des Formhohlraums (20) wieder eine geschlossene Oberfläche (34) entsteht, derart dass bei einem Gegeneinanderpressen und Verkleben der nach innen bewegten Wandbereiche des Blasschlauchs (12) aufgrund eines innen wirkenden Überdrucks ein durch den Formschieber (30, 32) gebildeter Spalt verschließbar und außen eine glatte, geschlossene Oberfläche für das Blasformteil bildbar ist.

5. Vorrichtung nach Anspruch 4,
bei der ein zweiter Formschieber (32) vorgesehen ist, mit dem der gegenüberliegende Wandbereich (28) des Blasschlauchs (12) in den Formhohlraum (20) hinein zu bewegen ist.

6. Vorrichtung nach Anspruch 4 oder 5,
bei der eine Blaseinrichtung vorgesehen ist, mittels der der Blasschlauch (12) nach der Verklebung (38) der beiden Wandbereiche (26, 28) vollständig aufblasbar ist.

## Claims

1. Method for blow moulding a parison (12), comprising the steps:
- inserting a parison (12) into a mould cavity (20) of a blow mould (14),
- introducing a first mould slide (30, 32) into the mould cavity (20) and thus moving a wall region (26, 28) of the parison (12) into the mould cavity (20) until bonding (38) of the wall region (26) with an opposite wall region (28) of the parison (12) occurs, wherein, after the insertion of the parison (12) into the mould cavity (20) and before the bonding (38) of the two wall regions (26, 28), the parison (12) is partially inflated and the first mould slide (30, 32), after the bonding (38) of the two wall regions (26, 28), is withdrawn completely from the mould cavity (20) again, such that the mould slide is removed from the mould cavity again and a closed surface (34) is formed at the wall of the mould cavity (20) again, such that, when the wall regions of the parison (12) that have been moved inwards are pressed together and bonded as a result of an inwardly acting overpressure, a gap formed by the mould slide (30, 32) is closed and a smooth, closed surface for the blow-moulded part is formed on the outside.

2. Method according to claim 1,
in which a second mould slide (32) is introduced into the mould cavity (20), and the opposite wall region (28) of the parison (12) is thus moved into the mould cavity (20) until bonding (38) of the two wall regions (26, 28) occurs.

3. Method according to either claim 1 or claim 2,
in which the parison (12) is inflated completely after the bonding (38) of the two wall regions (26, 28).

4. Apparatus (10) for blow moulding a parison (12), adapted for carrying out a method according to any one of claims 1 to 3, having a blow mould (14), in the mould cavity (20) of which the parison (12) is to be at least partially received, and having a first mould slide (30, 32) which can be introduced into the mould cavity (20),
in which a wall region (26) of the parison (12) can be moved by the first mould slide (30, 32) into the mould cavity (20) as far as an opposite wall region (28) of the parison (12) so that bonding (38) of the two wall regions (26, 28) occurs, wherein there is provided a blowing device by means of which the parison (12) can be partially inflated after the insertion of the parison (12) into the mould cavity (20) and before the bonding (38) of the two wall regions (26, 28), and wherein the first mould slide (30, 32) can be moved out of the mould cavity (20) again completely after bonding (38) of the two wall regions (26, 28), such that the mould slide can be removed from the mould cavity again and a closed surface (34) is formed at the wall of the mould cavity (20) again, such that, when the wall regions of the parison (12) that have been moved inwards are pressed together and bonded as a result of an inwardly acting overpressure, a gap formed by the mould slide (30, 32) can be closed and a smooth, closed surface for the blow-moulded part can be formed on the outside.

5. Apparatus according to claim 4,
in which there is provided a second mould slide (32) with which the opposite wall region (28) of the parison (12) is to be moved into the mould cavity (20).

6. Apparatus according to claim 4 or 5,
in which there is provided a blowing device by means of which the parison (12) can be inflated completely after the bonding (38) of the two wall regions (26, 28).

## Revendications

1. Procédé de soufflage d'une gaine soufflée (12) avec les étapes suivantes :
- introduction d'une gaine soufflée (12) dans un espace creux de moule (20) d'un moule de soufflage (14) ;
- introduction d'une première coulisse de moule (30, 32) dans l'espace creux de moule (20) et ainsi déplacement vers l'intérieur d'une zone de paroi (26, 28) de la gaine soufflée (12) dans l'espace creux de moule (20) jusqu'à provoquer un collage (38) de la zone de paroi (26) avec une zone de paroi (28) opposée de la gaine soufflée (12), sachant qu'après l'introduction de la gaine soufflée (12) dans l'espace creux de moule (20) et avant le collage (38) des deux zones de paroi (26, 28), la gaine soufflée (12) est en partie soufflée et que la première coulisse de moule (30, 32) est de nouveau entièrement sortie hors de l'espace creux de moule (20) après le collage (38) des deux zones de paroi (26, 28), de telle sorte que la coulisse de moule puisse être de nouveau retirée de l'espace creux de moule et qu'on obtienne de nouveau une surface fermée (34) au niveau de la paroi de l'espace creux de moule (20), de telle sorte qu'en cas de compression et de collage des zones de paroi déplacées vers l'intérieur de la gaine soufflée (12) en raison d'une surpression agissant depuis l'intérieur, une fente formée à travers la coulisse de moule (30, 32) soit fermée et qu'à l'extérieur, une surface lisse fermée soit formée pour la pièce moulée soufflée.

2. Procédé selon la revendication 1,
dans lequel une deuxième coulisse de moule (32) est introduite dans l'espace creux de moule (20) et déplace ainsi vers l'intérieur la zone de paroi (28) opposée de la gaine soufflée (12) jusque dans l'espace creux de moule (20) jusqu'au collage (38) des deux zones de paroi (26, 28).

3. Procédé selon l'une quelconque des revendications 1 à 2,
dans lequel après le collage (38) des deux zones de paroi (26, 28), la gaine soufflée (12) est entièrement soufflée.

4. Dispositif (10) de soufflage d'une gaine soufflée (12), adapté à la mise en œuvre d'un procédé selon l'une quelconque des revendications 1 à 3, avec un moule de soufflage (14) dans l'espace creux de moule (20) duquel la gaine soufflée (12) peut être logée au moins en partie et avec une première coulisse de moule (30, 32) pouvant être introduite dans l'espace creux de moule (20) ;
dans lequel avec la première coulisse de moule (30, 32), une zone de paroi (26) de la gaine soufflée (12) peut être déplacée de telle sorte vers l'intérieur dans l'espace creux de moule (20) jusqu'à pouvoir déplacer une zone de paroi (28) opposée de la gaine soufflée (12), qu'il se produise un collage (38) des deux zones de paroi (26, 28), un dispositif de soufflage étant prévu à l'aide duquel la gaine soufflée (12) peut être soufflée en partie après l'introduction de la gaine soufflée (12) dans l'espace creux de moule (20) et avant le collage (38) des deux zones de paroi (26, 28) et la première coulisse de moule (30, 32) pouvant de nouveau être entièrement déplacée vers l'extérieur hors de l'espace creux de moule (20) après le collage (38) des deux zones de paroi (26, 28), de telle sorte que la coulisse de moule puisse être retirée de l'espace creux du moule et qu'on obtienne de nouveau une surface fermée (34) au niveau de la paroi de l'espace creux de moule (20), de telle sorte qu'en cas de compression et de collage des zones de paroi déplacées vers l'intérieur de la gaine soufflée (12) en raison d'une surpression agissant vers l'intérieur, une fente formée par la coulisse de moule (30, 32) puisse être refermée et qu'il se forme à l'extérieur une surface fermée lisse pour la pièce moulée soufflée.

5. Dispositif selon la revendication 4,
dans lequel une deuxième coulisse de moule (32) est prévue avec laquelle la zone de paroi (28) opposée de la gaine soufflée (12) peut être déplacée vers l'intérieur dans l'espace creux de moule (20).

6. Dispositif selon la revendication 4 ou 5,
dans lequel un dispositif de soufflage est prévu à l'aide duquel la gaine soufflée (12) peut être entièrement soufflée après le collage (38) des deux zones de paroi (26, 28).
